# EUROPÄISCHE PATENTSCHRIFT

(11) **EP 0 479 115 B1**
(45) Veröffentlichungstag und Bekanntmachung des Hinweises auf die Patenterteilung: **08.03.1995**
(21) Anmeldenummer: 91116389.7
(22) Anmeldetag: 26.09.1991
(51) Int. Cl.: B62D 21/02, F16B 5/06, F16B 7/04

(54) **Fahrgestell für Kraftfahrzeuge oder Fahrzeuganhänger**
Chassis frame for automotive vehicles or trailers
Chassis pour véhicules automobiles ou remorques

(30) Priorität: 01.10.1990 DE 4031007
(43) Veröffentlichungstag der Anmeldung: 08.04.1992
(73) Patentinhaber: AL-KO KOBER AG, D-89359 Kötz (DE)
(72) Erfinder: Wöhrle, Rudolf, W-8873 Ichenhausen/Rieden (DE); Werdich, Anton, W-8878 Bibertal/Anhofen (DE)
(74) Vertreter: Ernicke, Hans-Dieter, Dipl.-Ing.

(56) Entgegenhaltungen:
- DE-A- 1 500 895
- DE-A- 2 607 154
- US-A- 1 698 179

## Beschreibung

Die Erfindung betrifft ein Fahrgestell für Kraftfahrzeuge oder Fahrzeuganhänger mit den Merkmalen im Oberbegriff des Anspruchs 1.

Ein solches Fahrgestell für Fahrzeuganhänger ist aus der DE-A-2 607 154 bekannt. Das Fahrgestell besitzt zwei Längsträger, die jeweils in zwei Holme unterteilt sind. Die Holme sind beidseits an Achsträgerschilde mittels Flanschverbindungen mit ineinandergreifenden Profilierungen angeschraubt. Die Flanschverbindungen erlauben nur die Verbindung zweier Fahrgestellteile. Außerdem müssen die Bleche eine gewisse Mindestdicke haben, um die Kräfte an den Flanschverbindungen aufnehmen zu können. Durch die beidseitige Verschraubung der Holme mit den Achsträgerschilden ist die Zahl der erforderlichen Flanschverbindungen ziemlich hoch, was einen erheblichen Kostenfaktor darstellt. Zum anderen sind die Achsträgerschilde zur Holmbefestigung und Kraftübertragung groß und massiv ausgebildet, wodurch das Gewicht des Fahrgestelles in die Höhe getrieben wird.

Ähnliche Fahrgestellkonstruktionen der vorgenannten Art zeigen auch die DE-A 2 804 378, das DE-U-7 402 175, das DE-U-7 540 484 und das DE-U-7 701 586.

In der Praxis sind im weiteren auch Fahrgestelle mit ungeteilten Längsträgern bekannt, die zwar ohne Flanschverbindungen auskommen, dafür aber eine wesentlich höhere Verpackungsgröße besitzen. Entsprechend hoch sind die Lager- und Transportkosten.

Es ist daher Aufgabe der vorliegenden Erfindung, ein Fahrgestell mit einer Flanschverbindung aufzuzeigen, die eine schnelle, einfache und sichere Montage ermöglicht und das Fahrgestell einfacher und wirtschaftlicher macht.

Die Erfindung löst diese Aufgabe mit den Merkmalen im Anspruch 1.

In den Unteransprüchen sind weitere vorteilhafte Ausgestaltungen der Erfindung angegeben.

Mit der Erfindung wird vorgeschlagen, zumindest zwei Fahrgestellteile durch ein Klemm- oder Clipselement zusammenzuhalten. Sie können sich dann trotz Öffnen der Flanschverbindung nicht voneinander lösen. Für die Flanschverbindung gibt es somit zwei Befestigungsmittel, nämlich zum einen das normale Spannmittel in Form einer Schraube, eines Nietes oder dergleichen und das vorerwähnte zusätzliche Klemm- oder Clipselement.

Das Klemm- oder Clipselement kann unterschiedlich ausgestaltet sein und wahlweise eine lösbare oder unlösbare Verbindung zwischen den Fahrgestellteilen schaffen. Für die Holmverbindung wird ein Klemmelement und eine unlösbare Verbindung bevorzugt, wobei über diese Klemmverbindung die Holme auch zusammengespannt werden.

Das bevorzugte Klemmelement besteht aus einem Boden- und einem Deckelteil, die über einen hohlgebohrten Zapfen miteinander im Klemmschluß verbunden sind, vorzugsweise über eine selbsthemmende Konusform. Zur Vermeidung von Toleranzproblemen und zur Sicherung eines Spannschlusses zwischen den Holmen, empfiehlt sich eine dünnwandige und damit verformungsfähige Gestaltung des Zapfens. Bei Passungsübermaß kann es sich dann beim Eindringen in die Aufnahmeöffnung verformen und läßt sich so trotz Übermaß tief genug eintreiben.

Das Boden- und Deckelteil können selbst je nach Anforderung unterschiedlich gestaltet sein. Wenn die zu verbindenden Teile eine ausreichende Blechdicke aufweisen, so daß die napfförmigen Profilierungen ausreichend formstabil sind, genügt eine einfache Scheibenform des Boden- und Deckelteils. Durch die erfindungsgemäße Gestaltung des Fahrgestells und der Holmverbindung können jedoch dünne und weniger stabile Bleche zum Einsatz kommen. In diesem Fall empfiehlt es sich, das Boden- und Deckelteil der Innen- bzw. Außenform der Profilierungen anzupassen. Das Klemmelement hält hierdurch die Profilierungen in ihrer Form und stabilisiert sie, so daß auch hohe Belastungen über die Flanschverbindungen übertragen werden können.

Das erfindungsgemäße Klemmelement läßt sich mit dieser Gestaltung mit Vorteil bei normalen Flanschverbindungen einsetzen, wo nur zwei Fahrgestellteile miteinander verbunden werden sollen. Die Formstabilisierung der napfförmigen Profilierungen erlaubt es nämlich, die Blechdicken weiter zu verringern und auf die Belastungen an anderen Stellen der Längsträger auszulegen. Bislang begrenzten die Flanschverbindungen die Blechdickenverringerung, die ansonsten belastungsmäßig von den anderen Längsträgerbereichen her möglich gewesen wäre.

Durch die gezielte Verstärkung der Flanschverbindungen mit dem Klemmelement ist dies nicht mehr der Fall.

Die Anordnung eines Klemm- oder Clipselementes läßt sich an beliebigen Stellen des Fahrgestelles verwirklichen, wobei außerdem drei oder mehr Fahrgestellteile miteinander verbunden werden können. Dies betrifft beispielsweise Flanschplatten zur Befestigung des Fahrzeugaufbaus, die gemeinsam über eine Flanschverbindung mit dem Längsträger verbunden sind. Es ist ferner nun prinzipiell möglich, an solchen Flanschverbindungen von Fahrgestellteilen andere Elemente zu befestigen, wie Schwenkfüße, Halterungen oder dergleichen. Diese Teile können dann demontiert werden, ohne daß die Verbindung zwischen den Fahrgestellteilen gelöst wird.

Die Flanschverbindung ermöglicht es, die beiden Holme des geteilten Längsverbinders nun direkt miteinander zu verbinden und an der gleichen Stelle auch den Achsträgerschild zu befestigen. Damit können die Stützkräfte unmittelbar übertragen werden, wodurch die Achsträgerschilde verkleinert werden können. Außerdem bietet dies die Möglichkeit, Flanschverbindungen einzusparen. Insgesamt wird das Fahrgestell hierdurch leichter und kostengünstiger.

Durch die Anordnung des Klemm- oder Clipselementes kann es bei der Montage der drei Fahrgestellteile nicht zu Problemen kommen, insbesondere wenn einmal die Achse ausgetauscht und dazu die Achsträgerschilde demontiert werden sollen. Zu diesem Zweck kann die Dreifach-Flanschverbindung gelöst und der Achsträgerschild entfernt werden, ohne daß die feste Verbindung der beiden Holme an den Befestigungsstellen gelöst werden müßte. Die Klemm- oder Clipselemente bieten eine ausreichende Abstützung und vermeiden Belastungsprobleme und Beschädigungen.

Die Verbindungsstelle zwischen den Holmen befindet sich im Bereich der Achsöffnung. Dies bringt durch die überlappte Lage der Holmteile eine gezielte Verstärkung des Fahrgestells im besonders belasteten Achsbereich. Günstig wirken sich hierbei auch die vorzugsweise verwendeten napfförmigen Flanschverbindungen aus. Die Fahrgestellverstärkung ist zur Vermeidung von Schäden am Fahrzeugaufbau bedeutsam. Außerdem können die Achsträgerschilde an dieser Stelle zusätzlich zur Stabilisierung der Holmverbindung herangezogen werden, wobei jedoch die Schildgröße und die Zahl der benötigten Flanschverbindungen kleiner als beim Stand der Technik sind.

Im bevorzugten Ausführungsbeispiel besitzen beide Holme eine vorspringende Verbindungslasche, so daß die Verbindungsstelle direkt über der Achsöffnung angeordnet ist. Dies bietet einen besonders guten und gezielten Verstärkungseffekt des Fahrgestells. Dies ist insbesondere für dünnwandige Holmbleche wichtig. Im Zuge des ständigen Bestrebens nach Gewichtsminimierung der Fahrgestelle sind die Blechdicken auf ca. 2 mm geschrumpft, weshalb gezielte Verstärkungen an den belasteten Stellen des Fahrgestells eine hohe Bedeutung haben.

Die schmalen Verbindungslaschen haben den weiteren Vorteil, daß die beiden Holme zur gegenseitigen Befestigung nur mit einer vergleichsweise geringen Fläche überlappen. Dies reicht einerseits für die Stabilität aus, bietet andererseits aber eine erhebliche Materialeinsparung. Die Doppellaschen stellen die optimale Bauform dar. Alternativ ist es auch möglich, nur an einem Holm eine Verbindungslasche vorzusehen oder sogar die Holme mit einer größeren Fläche überlappen zu lassen.

Die Verbindungslaschen springen vorzugsweise geradlinig vor, wodurch an der Verbindungsstelle die ebene Auflagefläche der Längsträger für den Aufbau erhalten bleibt. Die Verbindungslaschen entstehen durch eine Verjüngung des Holmsteges, wobei zugleich auch eine Aussparung für einen Teil der Achsöffnung gebildet wird. Auf eine aufwendige zusätzliche Verformung der Längsträger bzw. der Holme zur Bildung der Achsöffnung kann verzichtet werden.

Für einen minimalen Bau- und Montageaufwand empfiehlt es sich, den Achsträgerschild jeweils zusätzlich an den Flanschverbindungen der beiden Holme zu befestigen. Hierdurch werden drei Fahrgestellteile jeweils mit einer gemeinsamen Flanschverbindung miteinander befestigt. Es können hierdurch zwei weitere Flanschverbindungen eingespart werden, so daß letztendlich vier Flanschverbindungen zur gegenseitigen Befestigung der beiden Holme und des zugehörigen Achsträgerschildes genügen. Diese Bauform stellt das wirtschaftliche Optimum dar. Auch die Stabilität und die Gewichtseinsparung sind hierbei optimal, da nur geringe Überlappungen der Fahrgestellteile nötig sind und die Flanschverbindung sich allesamt in unmittelbarer Achsnähe befinden.

Das erfindungsgemäße Fahrgestell eignet sich besonders für Fahrzeuganhänger, insbesondere im Wohnwagenbereich. Hier sind die zu lösenden Probleme mit der Wirtschaftlichkeit, dem Montageaufwand, der Stabilität und dem Zwang zur Gewichtseinsparung besonders gravierend. Das erfindungsgemäße Fahrgestell läßt sich mit Vorteil aber auch für alle anderen Anhängerarten und auch für Kraftfahrzeuge, beispielsweise Wohnmobile, LKW mit Sonderaufbauten etc., einsetzen.

Die Erfindung ist in den Zeichnungen beispielsweise und schematisch dargestellt. Im einzelnen zeigen:
- Fig. 1:: ein Fahrgestell mit geteilten Längsträger und angesetzten Achsträgerschilden in Seitenansicht,
- Fig. 2:: eine Draufsicht auf das Fahrgestell gem. Fig. 1,
- Fig. 3:: eine Seitenansicht der Verbindungsstelle zwischen den Längsträgerholmen gem. Fig. 1 in abgebrochener Seitenansicht und ohne Achsträgerschild,
- Fig. 4:: eine Detailansicht eines Holmes mit Verbindungslasche,
- Fig.5:: einen Schnitt durch den Längsträger gem. Schnittlinie V - V von Fig. 1,
- Fig. 6:: ein Klemmelement in Eingriffstellung mit den Längsträgerholmen und im vergrößerten Querschnitt gem. Fig. 5,
- Fig. 7 und 8:: das Bodenteil des Klemmelementes im Querschnitt und in Draufsicht und
- Fig. 9 und 10:: das Deckelteil des Klemmelementes im Querschnitt und in Draufsicht.

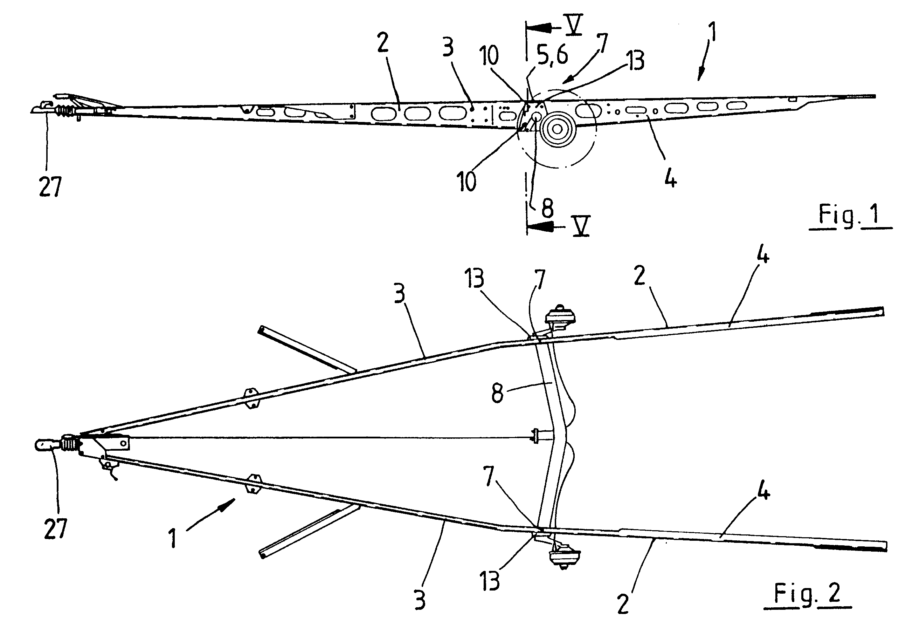

In Fig. 1 und 2 ist das Fahrgestell (1) eines Fahrzeuganhängers in Seitenansicht und Draufsicht dargestellt. Es besteht aus zwei gegabelten Längsträgern (2), die am vorderen Ende durch die Anhängerkupplung (27) und im mittleren Bereich durch die angebaute Achse (8) miteinander verbunden sind. Die Längsträger (2) sind jeweils in zwei Holme (3,4) geteilt, an denen auch der jeweils zugehörige Achsträgerschild (13) der Achse (8) befestigt ist. Die Längsträger (2) haben jeweils eine beidseits von den schmaleren Enden zur Achse (8) hin sich vergrößernde Höhe und bestehen aus abgekanteten Profilen, die vorzugsweise eine C-Form aufweisen. Die Längsträger (2) bieten mit ihren horizontalen Obergurten eine im wesentlichen ebene Auflage für den Fahrzeugaufbau. Die Achsträgerschilde (13) sind vorzugsweise Z-förmig abgekantet.

Die nachfolgende Einzelbeschreibung der Fahrgestellteile bezieht sich auf den jeweils dargestellten Längsträger, sowie dessen Teile und gilt auch entsprechend für den anderen Längsträger (2).

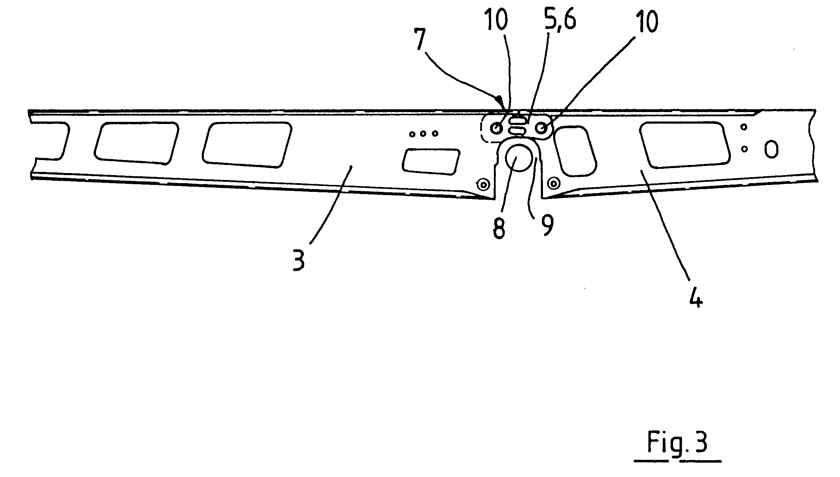

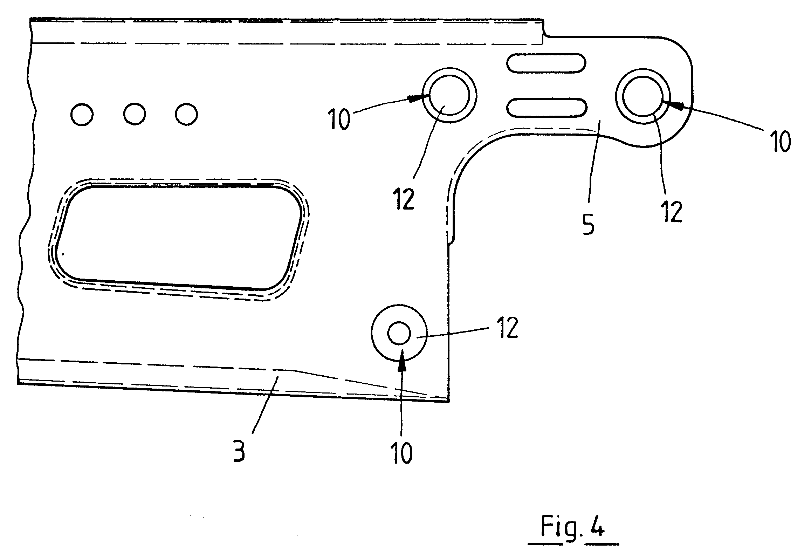

Wie Fig. 3 und 4 naher verdeutlichen, sind die beiden Holme (3,4) direkt miteinander verbunden, wobei die Verbindungsstelle (7) an der Achse (8) und zwar vorzugsweise direkt über der Achsöffnung (9) angeordnet ist. Die beiden Holme (3,4) weisen hierzu jeweils eine Verbindungslasche (5,6) auf, die im oberen Holmbereich geradlinig in Holmlängsrichtung vorspringt und schmaler als der vertikale Holmsteg ist. Die Achsöffnung (9) besteht aus einer U-förmigen Ausnehmung in den Holmstegen und wird anteilig von beiden Holmen (3,4) gebildet. Unterhalb der Verbindungslasche (5,6) ist dazu an jedem Holm (3,4) der angrenzende Stegrand bogenförmig ausgeschnitten.

Die beiden Verbindungslaschen (5,6) werden über zwei Flanschverbindungen (10) aneinander befestigt. Hierzu sind in den Verbindungslaschen (5,6) vorzugsweise napfförmige Profilierungen (11,12) eingeprägt, die formschlüssig ineinandergreifen. Die Profilierungen (11,12) haben die Form von Kegelstümpfen mit kreisrunder Grundfläche, können aber auch eine ovale Grundflächenform besitzen. Die Profilierungen (11,12) stützen sich im Eingriff an ihren schrägen Kegelwänden aneinander ab und sind im Bodenbereich etwas distanziert. Die eingeleiteten Querkräfte werden so über die Profilierungswände und in Formschluß übertragen. Die Flanschverbindung (10) wird durch ein Spannmittel (15), vorzugsweise eine Schraube, gesichert, die die Profilierungen (11,12) im Eingriff hält.

Über eine Flanschverbindung (10) der vorbeschriebenen Art ist auch der Achsträgerschild (13) jeweils mit den Holmen (3,4) verbunden. Diese Flanschverbindungen (10) befinden sich am unteren Holmrand und in unmittelbarer Nähe der Achsöffnung (9).

Der Achsträgerschild (13) ist außerdem an den beiden Flanschverbindungen (10) der Verbindungsstelle (7) mit den Holmen (3,4) beziehungsweise der Verbindungslasche (5,6) in einer Dreifachverbindung befestigt. An diesen Flanschverbindungen (10) tritt zur Schraube (15) zusätzlich ein nachfolgend näher beschriebenes Klemmelement (16), das die beiden Verbindungslaschen (5,6) zusammenhält und zusammenspannt.

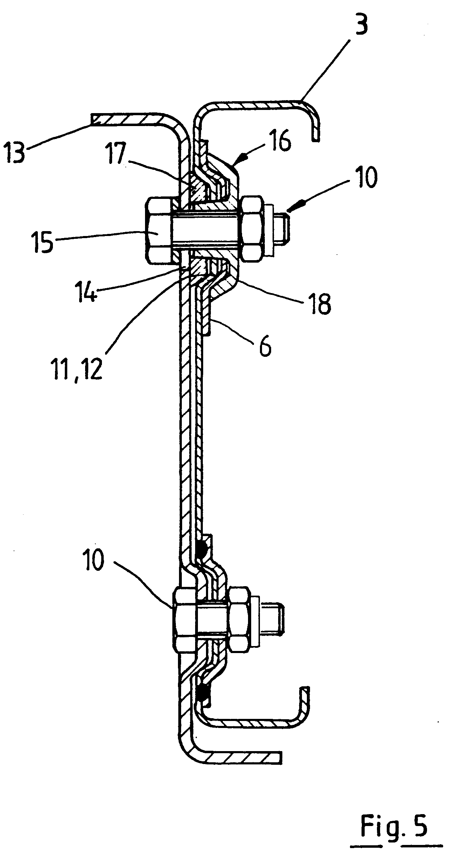

Fig. 5 zeigt diese beiden unterschiedlichen Arten von Flanschverbindungen (10) im Querschnitt durch den Längsträger (2) entsprechend der Schnittlinie V - V von Fig. 1. In der oberen Flanschverbindung (10) sind die Verbindungslasche (6) des hinteren Holms (4) und der gegenüberliegende Holm (3) beziehungsweise dessen Verbindungslasche (5) und der Achsträgerschild (13) miteinander verbunden. Die Flanschverbindung (10) befindet sich in diesem Bereich an der Übergangsstelle zwischen dem Holm (3) und seiner Verbindungslasche (5), so daß der gesamte Holm (3) geschnitten dargestellt ist.

An der unteren Flanschverbindung (10) ist der Holm (3) über napfförmige und formschlüssig ineinandergreifende Profilierungen (11,12) mit dem Achsträgerschild (13) verbunden und verschraubt.

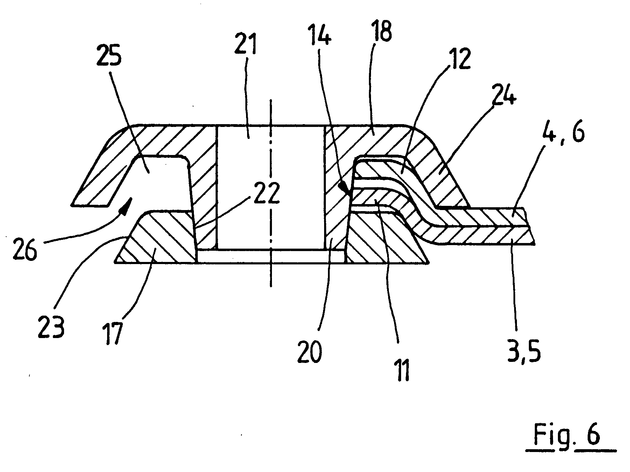

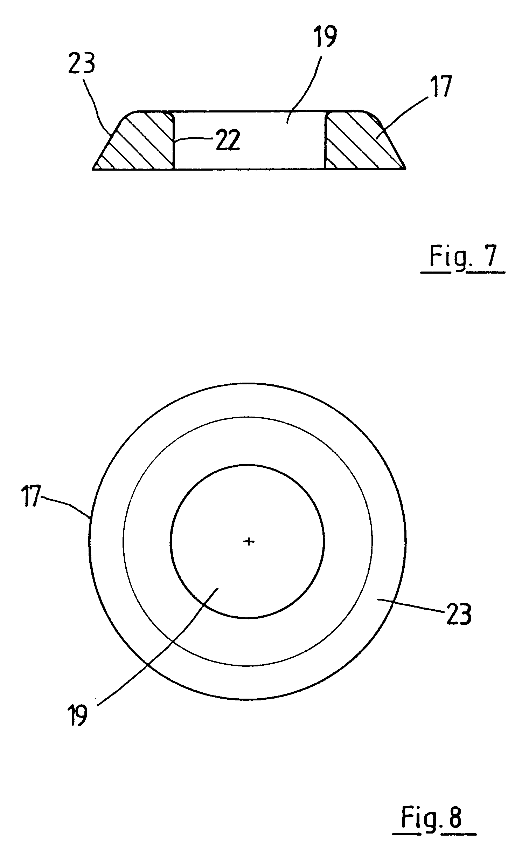

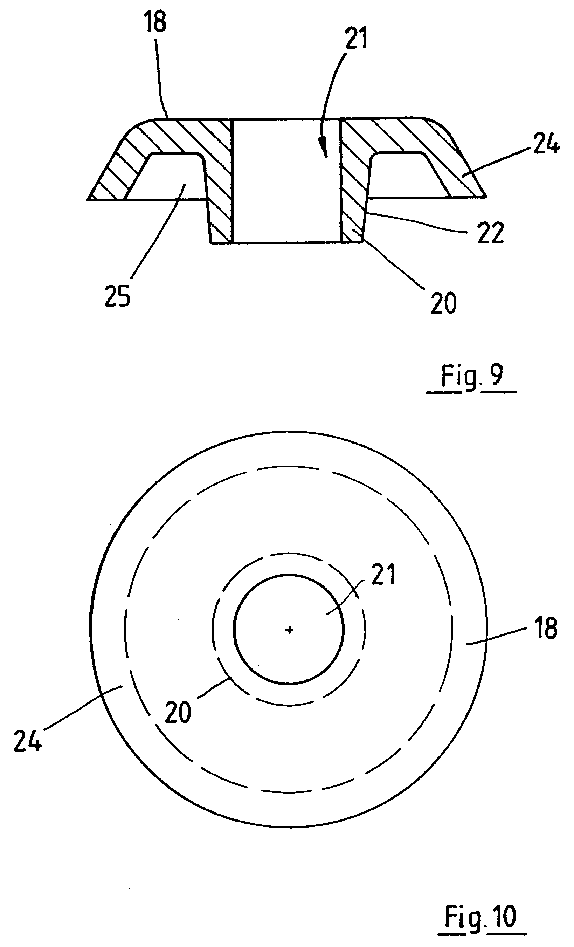

Zurückkommend auf die obere Flanschverbindung (10) sind der Holm (3) beziehungsweise seine Verbindungslasche (5) und die Verbindungslasche (6) des Holmes (4) durch das besagte Klemmelement (16) miteinander verbunden und zusammengespannt. Wie Fig. 6 - 10 näher verdeutlichen, besteht das Klemmelement (16) aus einem Bodenteil (17) und einem Deckelteil (18), die in ihrer Formgebung an die Profilierungen (11,12) angepaßt sind. Das Bodenteil (17) steckt in der Höhlung der inneren Profilierung (11) des Holmes (3) und stützt sich mit seiner kegelförmigen Außenwand (23) an der schrägen Seitenwand der Profilierung ab. Im Bodenbereich besteht hier ebenfalls zu Spannzwecken etwas Luft zwischen der Deckfläche des Bodenteiles (17) und der Profilierung (11).

Das Deckelteil (18) ist mit seinem Mantel (24) der Kegelform der äußeren Profilierung (12) nachgebildet und liegt dicht auf dieser auf. Das Deckelteil (18) übergreift somit kappenartig diese Profilierung (12) und verhindert ein seitliches Ausweichen oder Verformen bei Krafteinleitung. Für den besagten Stabilisierungszweck empfiehlt sich hier eine dichte Anlage auch im Bodenbereich der Profilierung (12).

Das Deckelteil (18) besitzt einen zentralen Zapfen (20), der nach unten vorsteht und hohlgebohrt ist. Der hohle Zapfen (20) bildet die Durchgangsöffnung (21) für die Schraube (15). Außenseitig weist der Zapfen (20) eine sich zum unteren Ende verjüngende Konusform (22) auf. Der Konuswinkel liegt dabei im Bereich der Selbsthemmung.

Das Bodenteil (17) besitzt eine zentrale Aufnahmeöffnung (19), in die der Zapfen (20) greift. Die Aufnahmeöffnung (19) hat zur Bildung einer unlösbaren Klemmverbindung diepassende selbsthemmende Konusform (22).

Die Profilierungen (11,12) besitzen in an sich bekannter Weise im Bodenbereich vorzugsweise zentrale Öffnungen (14) für die Schraube (15). Das Deckelteil (18) greift mit seinem Zapfen (20) durch diese Öffnungen (14), die zu diesem Zweck breiter als bei den anderen zweilagigen Flanschverbindungen (10) sind.

Der Zapfen (20) besitzt eine vergleichsweise geringe Wandstärke, die eine radiale Zapfenverformung zuläßt. Die Wandstärke des Bodenteils (17) ist hingegen wesentlich größer und bietet eine hohe Verformungssteifigkeit.

In der Montagereihenfolge werden die Holme (3,4) zuerst durch die Klemmelemente (16) verbunden, bevor der Achsträgerschild (13) befestigt wird. Hierzu wird der Deckelteil (18) durch die Schrauböffnungen (14) gesteckt und in die Aufnahmeöffnung (19) des Bodenteils (17) getrieben. Das Bodenteil (17) und das Deckelteil (18) werden hierbei durch eine geeignete Spannvorrichtung stets auf gleiche Länge ineinandergetrieben. Der Freiraum (25) unter dem kappenförmigen Mantel (24) und die kegelstumpfförmige Außenwand (23) bilden dabei einen Spalt (26), in dem die Profilierungen (11,12) zusammengespannt und formschlüssig abgestützt werden. Falls die Konusse (22) am Boden- und Deckelteil (17,18) Passungsübermaß haben sollten, verformt sich der dünnwandige Zapfen (20) unter dem Spanndruck und dringt trotz Passungsübermaß auf die gewünschte Endtiefe in die Aufnahmeöffnung (19).

Wie Fig. 5 verdeutlicht, kann das Bodenteil (17) eine plane Grundfläche haben und ein Stück über die gerade Stegfläche des Holmes (3) beziehungsweise der Lasche (5) vorstehen. Der Achsträgerschild (13) kann hierdurch mit planer Anlage am Bodenteil (17) durch die Schraube (15) befestigt werden. Die Querkräfte werden vom Achsträgerschild (13) vornehmlich an den beiden unteren Flanschverbindungen (10) auf die Holme (3,4) übertragen. An diesen Stellen besitzt der Achsträgerschild (13) selbst eine Profilierung (11). An den oberen Flanschverbindungen (10) braucht er dann keine Profilierung mehr aufzuweisen, sondern kann plan in der vorbeschriebenen Weise am Bodenteil (17) anliegen und mit dem Klemmelement (16) verschraubt sein. Die Schrauböffnung (14) im Achsträgerschild (13) kann an dieser Stelle Übermaß aufweisen und vorzugsweise länglich mit Erstreckung nach unten ausgebildet sein.

## Patentansprüche

1. Fahrgestell für Kraftfahrzeuge oder Fahrzeuganhänger, bestehend aus mehreren Fahrgestellteilen, die über Flanschverbindungen (10) mit napfförmigen, formschlüssig ineinandergreifenden und mit Spannmitteln (15) gesicherten Profilierungen (11,12) miteinander verbunden sind, dadurch **gekennzeichnet**, daß an der Flanschverbindung (10) zumindest zwei Fahrgestellteile (3,4,13) durch ein Klemm- oder Clipselement (16) zusammengehalten sind, wobei das Klemm- oder Clipselement (16) die Profilierungen (11,12) durchsetzt und eine Durchgangsöffnung (21) für das Spannmittel (15) aufweist.

2. Fahrgestell nach Anspruch 1, dadurch **gekennzeichnet**, daß ein Klemmelement (16) mit einem Deckelteil (18) und einem Bodenteil (17) vorgesehen ist, die die Profilierungen (11,12) zwischen sich einspannen und miteinander durch einen hohlen (21) Zapfen (20) verbunden sind, der durch die Profilierungen (11,12) greift.

3. Fahrgestell nach Anspruch 2, dadurch **gekennzeichnet**, daß das Bodenteil (17) in seiner Außenkontur der Innenseite der Profilierungen (11,12) angepaßt ist.

4. Fahrgestell nach Anspruch 3, dadurch **gekennzeichnet**, daß das Bodenteil (17) an der Seitenwand der inneren Profilierung (11) geführt und vom Boden der Profilierung (11) distanziert ist.

5. Fahrgestell nach Anspruch 1, 3 oder 4, dadurch **gekennzeichnet**, daß das Deckelteil (18) eine Kappenform aufweist und an die Außenkontur der Profilierungen (11,12) angepaßt ist.

6. Fahrgestell nach Anspruch 5, dadurch **gekennzeichnet**, daß das Deckelteil (18) die äußere Profilierung (12) dicht umschließt.

7. Fahrgestell nach einem der Ansprüche 1 bis 6, dadurch **gekennzeichnet**, daß das Bodenteil (17) eine Aufnahmeöffnung (19) für den vom Deckelteil (18) wegragenden Zapfen (20) aufweist, wobei der Zapfen (20) und die Aufnahmeöffnung (19) durch einen selbsthemmenden Konus (22) verbunden sind.

8. Fahrgestell nach Anspruch 7, dadurch **gekennzeichnet**, daß der hohle Zapfen (20) eine geringere Verformungssteifigkeit als das aufnehmende Bodenteil (17) besitzt.

9. Fahrgestell mit Längsträgern nach einem der Ansprüche 1 bis 8, dadurch **gekennzeichnet**, daß die Längsträger (2) Achsöffnungen (9) aufweisen und in mindestens zwei Holme (3,4) geteilt sind, die durch die Flanschverbindungen (10) unmittelbar miteinander und zugleich mit den Achsträgerschilden (13) verbunden sind, wobei die Verbindungsstelle (7) an der Achsöffnung (9) angeordnet ist.

10. Fahrgestell nach Anspruch 9, dadurch **gekennzeichnet**, daß zumindest ein Holm (3,4) eine über die Achsöffnung (9) vorspringende Verbindungslasche (5,6) aufweist.

11. Fahrgestell nach Anspruch 9 oder 10, dadurch **gekennzeichnet**, daß die Verbindungslasche (5,6) geradlinig vorspringt.

12. Fahrgestell nach Anspruch 9, 10 oder 11, dadurch **gekennzeichnet**, daß die Verbindungslasche (5,6) schmaler als der Steg des Holms (3,4) ist.

13. Fahrgestell nach einem der Ansprüche 9 bis 12, dadurch **gekennzeichnet**, daß der Achsträgerschild (13) an der Flanschverbindung (10) der beiden Holmen (3,4) befestigt ist.

## Claims

1. Chassis for motor vehicles or vehicle trailers, comprising a plurality of chassis parts which are connected to one another by way of flange connections (10) having cup-shaped profiled portions (11, 12) which engage with form fit in one another and are secured by means of tensioning means (15), characterized in that at least two chassis parts (3, 4, 13) are held together at the flange connection (10) by a clamping or clip element (16), the clamping or clip element (16) passing through the profiled portions (11, 12) and having a through opening (21) for the tensioning means (15).

2. Chassis according to Claim 1, characterized in that a clamping element (16) is provided with a cover part (18) and a base part (17), and these tension between them the profiled portions (11, 12) and are connected to one another by a hollow (21) peg (20) which passes through the profiled portions (11, 12).

3. Chassis according to Claim 2, characterized in that the base part (17) is adapted in its external contour to the inside of the profiled portions (11, 12).

4. Chassis according to Claim 3, characterized in that the base part (17) is guided on the side wall of the inner profiled portion (11) and is spaced from the base of the profiled portion (11).

5. Chassis according to Claim 1, 3 or 4, characterized in that the cover part (18) has a cap shape and is adapted to the external contour of the profiled portions (11, 12).

6. Chassis according to Claim 5, characterized in that the cover part (18) surrounds the outer profiled portion (12) in sealing manner.

7. Chassis according to one of Claims 1 to 6, characterized in that the base part (17) has a receiving opening (19) for the peg (20), which projects away from the cover part (18), the peg (20) and the receiving opening (19) being connected by a self-locking cone (22).

8. Chassis according to Claim 7, characterized in that the hollow peg (20) has less deformation rigidity than the receiving base part (17).

9. Chassis having longitudinal supports according to one of Claims 1 to 8, characterized in that the longitudinal supports (2) have spindle openings (9) and are divided into at least two spars (3, 4) which are connected directly to one another by the flange connections (10) and are at the same time connected to the spindle support plates (13), the connection point (7) being arranged at the spindle opening (9).

10. Chassis according to Claim 9, characterized in that at least one spar (3, 4) has a connection fishplate (5, 6) projecting over the spindle opening (9).

11. Chassis according to Claim 9 or 10, characterized in that the connection fishplate (5, 6) projects in a straight line.

12. Chassis according to Claim 9, 10 or 11, characterized in that the connection fishplate (5, 6) is narrower than the web of the spar (3, 4).

13. Chassis according to one of Claims 9 to 12, characterized in that the spindle support plate (13) is secured to the flange connection (10) of the two spars (3, 4).

## Revendications

1. Châssis pour véhicules automobiles ou remorques, constitué par plusieurs parties qui sont reliées entre elles au moyen de liaisons à brides (10) comportant des profilés en forme de boutons (11, 12), qui s'interpénètrent selon une liaison par formes complémentaires et sont bloquées à l'aide de moyens de serrage (15), caractérisé par le fait qu'au moins deux parties (3, 4, 13) du châssis sont maintenues assemblées au niveau de la liaison à bride (10) au moyen d'un élément de serrage ou clip (16), l'élément de serrage ou clip (16) traversant les profilés (11, 12) et possédant une ouverture de passage (21) pour le moyen de serrage (15).

2. Châssis suivant la revendication 1, caractérisé par le fait qu'il est prévu un élément de serrage (16) comportant une partie formant couvercle (18) et une partie de base (17), qui serrent entre elles les profilés (11, 12) et sont reliées entre elles par un embout (20) évidé (21), qui traverse les profilés (11, 12).

3. Châssis suivant la revendication 2, caractérisé par le fait que le contour extérieur de la partie de base (17) est adapté à la face intérieure des profilés (11, 12).

4. Châssis suivant la revendication 3, caractérisé par le fait que la partie de base (17) est guidée le long de la paroi latérale du profilé intérieur (11) et est située à distance de la base du profilé (11).

5. Châssis suivant la revendication 1, 3 ou 4, caractérisé par le fait que la partie formant couvercle (18) possède une forme de capot et est adaptée au contour extérieur des profilés (11, 12).

6. Châssis suivant la revendication 5, caractérisé par le fait que la partie formant couvercle (18) entoure étroitement le profilé extérieur (12).

7. Châssis suivant l'une des revendications 1 à 3, caractérisé par le fait que la partie de base (17) possède une ouverture de logement (19) pour l'embout (20), qui fait saillie à partir de la partie formant couvercle (18), l'embout (20) et l'ouverture de logement (19) étant reliés par un cône autobloquant (22).

8. Châssis suivant la revendication 7, caractérisé par le fait que l'embout évidé (20) possède une stabilité de forme inférieure à celle de la partie de base (17) qui le reçoit.

9. Châssis comportant des longerons suivant l'une des revendications 1 à 8, caractérisé par le fait que les longerons (2) possèdent des ouvertures d'essieu (9) et sont divisés en au moins deux barres (3, 4), qui sont reliées par les liaisons à bride (10) directement entre elles et simultanément aux flasques (13) de support d'essieu, le point de liaison (7) étant situé au niveau de l'ouverture d'essieu (9).

10. Châssis suivant la revendication 9, caractérisé par le fait qu'au moins une barre (3, 4) possède une patte de liaison (5, 6) qui est disposée en saillie au-dessus de l'ouverture d'essieu (9).

11. Châssis suivant la revendication 9 ou 10, caractérisé par le fait que la patte de liaison (5, 6) est disposée en saillie avec une forme rectiligne.

12. Châssis suivant la revendication 9, 10 ou 11, caractérisé par le fait que la patte de liaison (5, 6) est plus étroite que l'âme de la barre (3, 4).

13. Châssis suivant l'une des revendications 9 à 12, caractérisé par le fait que le flasque de support d'essieu (13) est fixé à la liaison à bride (10) des deux barres (3, 4).
